# EUROPEAN PATENT SPECIFICATION

(11) **EP 4 335 297 B1**
(45) Date of publication and mention of the grant of the patent: **06.11.2024**
(21) Application number: 23196077.4
(22) Date of filing: 07.09.2023
(51) Int. Cl.: A23B 4/005, A23L 3/3418, A23B 4/16, A23L 3/16, B65B 55/14, B65B 55/18, B65B 31/02

(54) **METHOD FOR THE PACKAGING OF FOOD PRODUCTS**
VERFAHREN ZUM VERPACKEN VON NAHRUNGSMITTELN
PROCÉDÉ D'EMBALLAGE DE PRODUITS ALIMENTAIRES

(30) Priority: 08.09.2022 BE 202205711
(43) Date of publication of application: 13.03.2024
(73) Proprietor: Volys Star NV, 8860 Lendelede (BE)
(72) Inventor: DE WILDE, Koen, 8860 Lendelede (BE); BATTEL, Guido, 8860 Lendelede (BE)
(74) Representative: Hostens, Veerle

(56) References cited:
- US-A- 4 543 263
- US-A1- 2015 367 972
- "Food Packaging Science and Technology", vol. 3, 1 April 2008, TAYLOR & FRANCIS, article LEE DONG SUN: "Thermally Preserved Food Packaging: Retortable and Aseptic Case Study: Design of a Thermal-Processed Tray-Set Containing High- and Low-Acid Foods", pages: 1 - 644, XP093034811

## Description

The present invention relates to a method for the packaging of treated and at least partially solid food products, which owing to their nature require an essential heating step, comprising the steps:
a) heating these food products so that the P90/10 pasteurization conditions are obtained;
b) providing a tray-shaped container for the food products;
c) after steps a and b, introducing the food products into the container when, owing to the heating in step a, they still have a temperature of at least 65°;
d) after step c, injecting superheated steam into the container with the food products contained therein;
e) after step d, by means of a welding technique with a sealing film, barrier-forming closure of the container with the food products contained therein to form a sealed package; and
f) after step e, cooling the sealed package.

The container may be made of rigid or of flexible material.

The treated and at least partially solid food products may for example be chicken and turkey meat products, vegetarian and vegan products, which are prepared and/or formed as known in the food industry.

When said food products are mentioned in this patent application, it may relate to one or more items.

These food products are heated in a known manner so that the P90/10 pasteurization conditions are obtained. Thus, for this purpose they undergo a heat treatment that is equal to or equivalent to a core temperature of 90°C for at least 10 minutes.

The introducing of the food products into a container only after the food products have been heated in this way is then a crucial step, in which every possible risk of recontamination must be avoided. Therefore, before the barrier-forming closure of the container, superheated steam is injected into the container to eradicate any recontamination.

Next, barrier-forming closure of the container with a sealing film is carried out by a welding technique. Then the sealed package thus formed is cooled, so that the products packaged therein are also cooled. On cooling, the superheated steam disappears and a vacuum package is obtained.

A drawback of introducing superheated steam into the container and, after closure thereof, cooling of the sealed package, is that on application of vacuum to the package in this way, the food that is packaged is deformed and looks less attractive. For example, in the case of chicken meatballs, we want to preserve the original nicely formed package and the shape of the meatballs.

The aim of the present invention is to rectify this drawback.

This aim is achieved in that, between step d) and step e), a gas mixture comprising nitrogen and carbon dioxide is injected into the container with the food products contained therein.

This not only achieves the aforementioned aim. After cooling of the packaged food products, these also have a longer shelf life in comparison with a traditional process wherein cooled food products are packaged with a gas mixture.

The injecting of the gas may be carried out by various known techniques, for example such as the techniques that are used for injecting superheated steam. The gas may for example be injected by so-called flushing, wherein the atmosphere is displaced, firstly by the overpressure of the superheated steam injected into the container and then by the gas mixture injected into the container.

In step c, the food products are preferably introduced into the container when, owing to the heating in step a, they still have a temperature of at least 70°C and even more preferably when they still have a temperature of approximately 70°C.

In step e, it is ensured that the formed sealed package has adequate barrier properties so that the composition of the injected gas mixture does not change undesirably for the whole storage time. The sealing film ensures that no increase in oxygen, or evaporation of water vapour and preserving gases, can occur. The sealing film prevents oxygen penetrating into the packaging, and prevents the preserving gases (nitrogen and carbon dioxide) and water vapour (derived from the food products) escaping from the package. Welding (i.e. joining together by heating) is a known technique for gas-tight attachment of the sealing film on the container, or on similar sealing film, or on both.

Ideally, at the end of the proposed shelf life, at most 1 vol% oxygen is present, and the proportion of nitrogen is the same as on injection thereof into the container. The proportion of carbon dioxide will have gone down owing to absorption in the foodstuff.

For optimum packaging of said food products, the weight of the food products is preferably between 20g and 5000g. Depending on the compactness, the weight of the food product is preferably selected either between 20g and 3500g for more compact food products, or between 80g and 5000g for less compact food products and more specifically 1000g or more specifically 500g.

The several possible variants of tray-shaped containers that are known in the prior art for putting food products therein in order to package these in accordance with a method according to the preliminary part of the first claim are also suitable for putting food products therein in order to package these according to the invention. These tray-shaped containers are known in various types of materials and with various finishes.

In a preferred embodiment, a tray-shaped container of this kind is formed by thermoforming.

The gas mixture that is injected into the container in a method according to the present invention preferably comprises between 10 vol% and 50 vol% of carbon dioxide and preferably comprises between 50 and 90 vol% of nitrogen.

This gas mixture is preferably introduced at room temperature. No use is made of cooling effects of nitrogen.

In step c, the superheated steam preferably has a temperature between 100°C and 180°C.

The superheated steam is more preferably injected at a steam pressure between 150 kPa and 1000 kPa and preferably over a time span between 2 s and 12 s.

For the cooling in step f, the same known requirements apply as for the cooling in methods according to the prior art according to the preliminary part of claim 1. These depend on the density of the food products, the weight and the method of cooling. The package is brought below 10°C as quickly as possible and preferably cooled until the food products contained therein have a core temperature of at most 4°C and even more preferably a core temperature of about 2°C.

The present invention is now explained in more detail on the basis of the following detailed description of some embodiments of methods according to the present invention. The purpose of this description is exclusively to give illustrative examples and to point out further advantages and features of the present invention, and so is not in any way to be interpreted as a limitation of the field of application of the invention or of the patent rights claimed in the claims.

In this detailed description, reference is made by means of reference numbers to the appended drawings, wherein:
- Fig. 1A shows schematically a first embodiment of a tray-shaped container and a first embodiment of a sealing film for forming a first embodiment of a sealed package for the packaging of food products according to the invention;
- Fig. 1B shows schematically a second embodiment of a tray-shaped container and the first embodiment of a sealing film for forming a second embodiment of a sealed package for the packaging of food products according to the invention;
- Fig. 1C shows schematically the second embodiment of a tray-shaped container and a second embodiment of a sealing film for forming a third embodiment of a sealed package for the packaging of food products according to the invention;
- Fig. 2 shows schematically how food products are introduced into a tray-shaped container in accordance with step c;
- Fig. 3 shows schematically how superheated steam is injected according to step d into the tray-shaped container from Fig. 2 with the food products contained therein;
- Fig. 4 shows schematically how, in the tray-shaped container from Fig. 3 with the food products contained therein and the superheated steam injected therein, additionally a gas mixture is injected according to the invention.
- Fig. 5A shows schematically the first embodiment of a sealed package formed with the container from Fig. 1A, into which, according to Figs. 2-4, food products have been introduced and superheated steam and a gas mixture have been injected, and which undergoes barrier-forming closure with the sealing film from Fig. 1A;
- Fig. 5B shows schematically the second embodiment of a sealed package formed with the container from Fig. 1B, into which, according to Figs. 2-4, food products have been introduced and superheated steam and a gas mixture have been injected, and which undergoes barrier-forming closure with the sealing film from Fig. 1B;
- Fig. 5C shows schematically the second embodiment of a sealed package formed with the container from Fig. 1C, into which, according to Figs. 2-4, food products have been introduced and superheated steam and a gas mixture have been injected, and which undergoes barrier-forming closure with the sealing film from Fig. 1C.

All kinds of food products (1) can be packaged using a method for the packaging of food products (1) according to the present invention. In the case of pieces, there may be one or more pieces of these food products (1).

More specifically, this relates to chicken and turkey meat products, vegetarian and vegan products.

These food products (1) are prepared and formed, wherein, as is known in the food industry, during preparation attention is also paid to the water activity (a_{w}), acidity (pH), salt and addition of preserving ingredients. Attention is also paid to the manner of preparation and choice of ingredients used, for maximum avoidance of loss of moisture, fat or viscous components.

The method according to the present invention is particularly suitable for the packaging of four different types of products:
1) Whole meat products based on chicken and/or turkey, which may consist of whole or chopped fillets with and without skin, whole or chopped thighs and/or drumsticks with and without skin and without bone, whole or chopped thighs and/or drumsticks with and without skin, complete with bone, and/or whole chicken wings. One or more of these meat cuts are either injected and mixed, or mixed with brine and/or a marinade based on oil or water with the usual additives such as common salt or nitrite brine salt, water, sodium ascorbate or other antioxidant, herbs and flavourings, binders (phosphates, carrageenates, starches and others), acidity regulators (acetates and lactates and others) and the like. Before the heating step, these products may or may not further undergo a specific treatment with oil marinade, colouring matter, batter or batter with breadcrumb coating (breadcrumbs, flour, cornflakes, mixed vegetables, etc.) to arrive at the food products (1) to be packaged. The total weights of these food products (1) may vary between 20g and 3500g. More specifically, they are for example food products (1) with a separate weight up to 1000g.
2) Preformed meat products based on chopped chicken and/or turkey meat, consisting of chopped thigh meat and/or drumstick meat and/or fillet and/or skin and/or cuttings and/or mechanically deboned meat mixed with a mixture of water and the usual additives such as common salt or nitrite brine salt, water, sodium ascorbate or other antioxidant, herbs and flavourings, binders (phosphates, carrageenates, starches and others), acidity regulators (acetates and lactates and others) and the like. These meat products are then formed in various shapes and weights such as ball shape, sausage shape, meatloaf shape, hamburger shape, schnitzel shape, filled product form, fillet form and so on. Before the heating step, these products may or may not undergo a specific treatment with oil marinade, colouring matter, batter or batter with breadcrumb coating (breadcrumbs, flour, cornflakes, mixed vegetables, etc.) to arrive at the food products (1) to be packaged. These food products (1) may have a total weight between 20g and 3500g. More specifically, they are for example food products (1) with a separate weight up to 1000g.
3) Preformed vegetarian and vegan products based on a mixture of soya and/or wheat and/or lupin and/or chickpeas and/or peas and/or egg and/or oats and/or vegetables and/or mycoproteins and/or mushrooms mixed with a mixture of water and the usual additives such as common salt, water, sodium ascorbate or other antioxidant, herbs and flavourings, binders (fibres, carrageenates, starches and others), acidity regulators (acetates and lactates and others) and the like. These vegetarian or vegan products are then formed in various shapes and weights such as ball shape, sausage shape, meatloaf shape, hamburger shape, schnitzel shape, filled product form, fillet form and so on. Before the heating step, these products may or may or not undergo a specific treatment with oil marinade, colouring matter, batter or with breadcrumb coating (breadcrumbs, flour, cornflakes, mixed vegetables, etc.) to arrive at the food products (1). The total weights of these food products (1) may vary between 20g and 3500g. More specifically, they are for example food products (1) with a separate weight up to 1000g.
4) A variant of product types 1, 2 and 3 as described above (whole meat products, preformed meat products and/or preformed vegetarian or vegan products), which are cut into snippets, slices or strips to form the food products (1) to be packaged. The snippets may be of round, oval or variable/irregular shape, the strips may be elongated, variable/irregular or cube-shaped. The total weights of these food products (1) may vary between 80g and 5000g, the separate weights more specifically being for example up to 500g.

Food products (1) that have been treated in one or more of the ways described above are heated in step a of a method according to the invention.

The heating step has a dual purpose. On the one hand, owing to the heating step, the product becomes solid through the coagulation of the meat and/or egg and/or vegetable proteins whether or not in combination with the binders such as starches and carrageenates and others. On the other hand, the heating also ensures reduction of any spoilage and pathogenic bacterial flora present. The heating step will not be discussed further in this patent application, as this is known subject matter in the food industry. For the heating step, use may be made of various known techniques such as by means of dry hot air (grilling/singeing/searing) and/or heating by means of steam and/or by deep frying and/or by hot smoking and/or by means of microwave technology and/or by means of ohmic heating and/or other known heating and pasteurization techniques. These techniques are all very different and they all have their own process variables that are known in the food industry. During heating, the aim is to heat the food products (1) as defined above in such a way that the known P90/10 pasteurization conditions are obtained into the core of the food products (1).

According to step b of a method according to the invention, a tray-shaped container (21, 22) is provided. Said tray-shaped container (21, 22) is of course suitable for the placing and storage of food products (1) therein. Some examples of such containers (21, 22) are illustrated in the figures and are described hereunder.

These and other examples of containers (21, 22) are also known in the food industry for the packaging of food products (1) by a method according to the preliminary part of claim 1, so that only a few examples are briefly described in more detail hereunder.

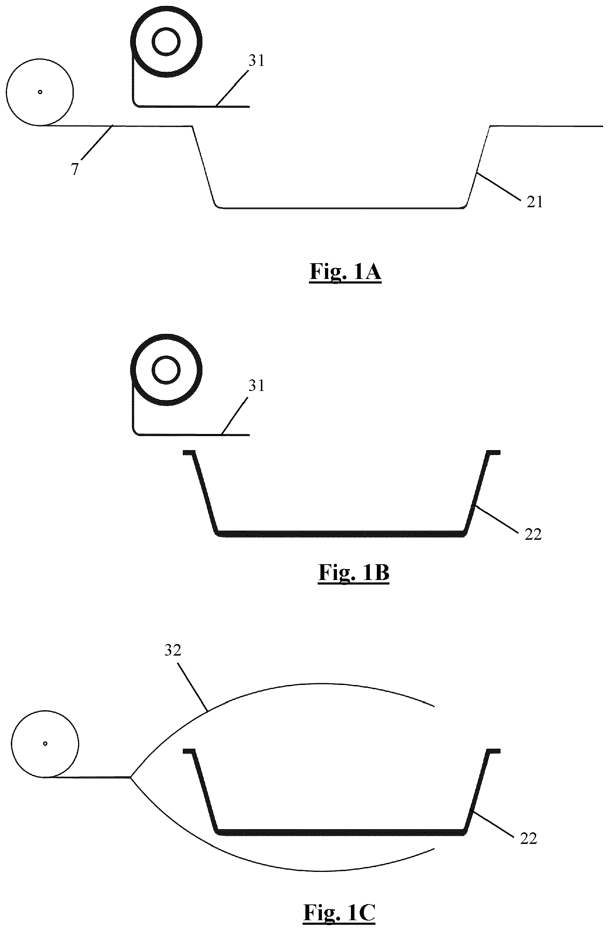

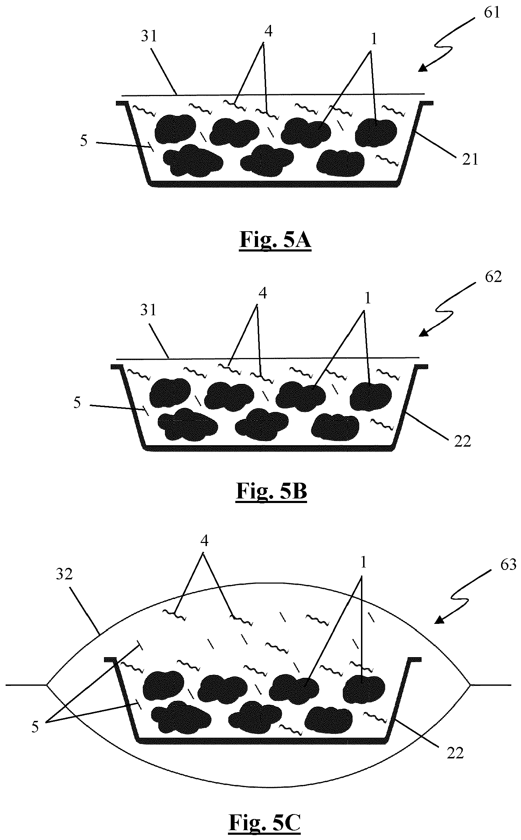

In Figs. 1A and 5A, the tray-shaped container (21) is formed by thermoforming from a first film (bottom film) (7) which for example is manufactured from a special type of plastic or biodegradable or biocompostable material with a reliable gas and water barrier. This bottom film (7) is wound on a roll, is unwound and is formed into a tray-shaped container (21) by means of a combination of heating and vacuum technology. This container (21) may be square or rectangular or round or oval as a function of the type of food products (1) to be packaged. The size also varies as a function of the type of food products (1) and the weight.

In Figs. 1B, 1C, 5B and 5C, the container (22) is a preformed tray, which may consist of various sizes and materials, in which the food products (1) described above are placed. The trays (22) may consist of a plastic material with a gas and water barrier or a cardboard or paper type whether or not treated with a gas and water barrier by means of a coating or an applied film, or a biodegradable or compostable material with a gas and water barrier. The shape may be square or rectangular or round or oval as a function of the type of food products (1) to be packaged. The size also varies as a function of the type of food products (1) and the weight.

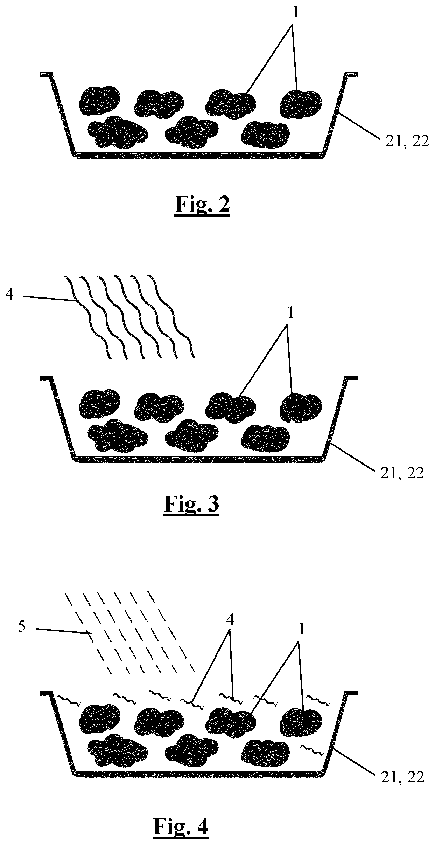

After the food products (1) have been heated, the still hot food products (1) are placed, in a step c of the method according to the present invention, in a said tray-shaped container (21, 22), either mechanically, manually or semi-manually (see Fig. 2). The food products must then have a minimum temperature of at least 65°C, ideally 70°C. Placement may be based on the number of pieces (for example 1 to 500 pieces) or based on the required weight (for example 20g to 5000g).

Then, in a step d of a method according to the present invention, superheated steam (4) is injected into the container (21, 22) between the food products (1) (see Fig. 3). The steam (4) preferably has a minimum temperature of 100°C and a maximum of 180°C at a steam pressure of at least 150 kPa and at most 1000 kPa. The duration of steam injection depends on the size of the container (21, 22) and the filling ratio and weight as well as the strength of the final packaging (61, 62, 63). The steaming time may vary and is preferably selected between 2 and 12 s.

This steaming step is followed, in a method according to the present invention, by the flushing and mixing of the food products (1) in the container with a gas mixture consisting of nitrogen (N₂) and carbon dioxide (CO₂), which is known in the food industry in other types of methods for the packaging of food products, wherein cooled foodstuffs are only packaged with a gaseous medium to obtain an additional preserving effect (see Fig. 4). The duration of this step again depends on the size and filling ratio of the packaging. The gas mixture further comprises between 10 vol% and 50 vol% of carbon dioxide and between 50 vol% and 90 vol% of nitrogen.

According to step d of a method according to the invention, a container (21, 22) that has been filled with food products (1) and into which superheated steam (4) and a gas mixture (5) have been injected is closed with a sealing film (31, 32). Some examples of these sealing films (31, 32) and the closure of a said container (21, 22) are illustrated in the figures and are described hereunder.

These and other examples of sealing films (31, 32) and methods for closing a said container (21, 22) with said sealing film (31, 32) are also known in the food industry for the packaging of food products (1) by a method according to the preliminary part of claim 1, so that only a few examples are briefly described in more detail hereunder.

In Figs. 1A, 1B, 5A and 5B, a sealing film (31) is welded on top of and onto the respective container (21, 22) in order to form an unperforated sealed package (61, 62) round the food products (1).

In Figs. 1C and 5C, a wrapping film is applied as sealing film (32) round the container (22) and is heat-sealed to form an unperforated sealed package round the food products (1).

For this purpose, the sealing films (31, 32) are in each case wound on a roll, and are unwound from it for closing the container (21, 22).

Ideally, the combination of the correct gas pressure and temperature of the injected steam (4) and injected gas mixture (5) ensures that the food products (1) are packaged correctly, i.e. without an inflated film or without a collapsed film (apparent vacuum) and without deposition of fat, moisture, gelatin or other viscous deposits in the packaging (61, 62, 63).

The sealing film (31, 32) may consist of a plastic film or a biodegradable film or a biocompostable film or a paper/cardboard type of film with a reliable gas and water barrier.

The packaging materials described may be both transparent and printed or may consist of coloured material.

According to step f of a method according to the invention, the sealed package (61, 62, 63) is cooled. This cooling step is also a known and necessary step in the food industry, wherein the hot products are cooled as quickly as possible to prevent bacterial growth. The packaged food products (1) are brought as quickly as possible to a core temperature of 4°C or lower, for example by means of cooling by cold air circulation or other known techniques.

In tests with thermoformed packages (such as in Figs. 1A and 5A), with a container (21) with a substantially rectangular shape of 13 cm by 20 cm and with a height of 7 cm, filled with 1 kg of food products (1), wherein the injected superheated steam (4) had a temperature between 120°C and 130°C at a pressure of 300 kPa and wherein the injected gas mixture comprised 20 vol% of carbon dioxide and 80 vol% of nitrogen, it was established that with this innovative manner of packaging by a method according to the invention it is possible to obtain a total shelf life of at least 13 weeks for these food products (1). This total shelf life consists of 2 components:
a. a first shelf life in climate-controlled conditions in the factory for a period of 21 days at -2°C;
b. followed by a second shelf life period for the customer/consumer at 7°C of at most 70 days (shelf life for the customer/consumer).

## Claims

1. Method for the packaging of treated and at least partially solid food products (1), which owing to their nature require an essential heating step, comprising the steps:
a) heating these food products (1) so that the P90/10 pasteurization conditions are obtained;
b) providing a tray-shaped container (21, 22) for the food products (1);
c) after steps a and b, introducing the food products (1) into the container (21, 22) when as a result of the heating in step a, these food products (1) still have a temperature of at least 65°;
d) after step c, injecting superheated steam (4) into the container (21, 22) with the food products (1) contained therein;
e) after step d, by means of a welding technique with a sealing film (31, 32), barrier-forming closure of the container (21, 22) with the food products (1) contained therein to form a sealed package (61, 62, 63); and
f) after step e, cooling the sealed package (61, 62, 63);
**characterized in that** between step d) and step e), a gas mixture (5), comprising nitrogen and carbon dioxide, is injected into the container (21, 22) with the food products (1) contained therein.

2. Method according to claim 1, **characterized in that** the weight of the food products (1) is between 20g and 5000g.

3. Method according to one of the preceding claims, **characterized in that** the tray-shaped container (21, 22) is formed by thermoforming.

4. Method according to one of the preceding claims, **characterized in that** the gas mixture (5) comprises between 10 and 50 vol% of carbon dioxide.

5. Method according to one of the preceding claims, **characterized in that** the gas mixture (5) comprises between 50 and 90 vol% of nitrogen.

6. Method according to one of the preceding claims, **characterized in that** the superheated steam (4) has a temperature between 100°C and 180°C.

7. Method according to one of the preceding claims, **characterized in that** the superheated steam (4) is injected at a steam pressure between 150 kPa and 1000 kPa.

8. Method according to one of the preceding claims, **characterized in that** the superheated steam (4) is injected over a time span between 2 s and 12 s.

## Patentansprüche

1. Verfahren zur Verpackung von behandelten und wenigstens teilweise festen Lebensmittelprodukten (1), die aufgrund ihrer Beschaffenheit einen wesentlichen Erhitzungsschritt benötigen, umfassend die Schritte:
a) Erhitzen dieser Lebensmittelprodukte (1), so dass die P90/10-Pasteurisierungsbedingungen erfüllt werden;
b) Bereitstellen eines schalenförmigen Behälters (21, 22) für die Lebensmittelprodukte (1);
c) nach den Schritten a und b Einführen der Lebensmittelprodukte (1) in den Behälter (21, 22), wenn diese Lebensmittelprodukte (1) als Folge des Erhitzens bei Schritt a noch eine Temperatur von wenigstens 65 °C aufweisen;
d) nach Schritt c Einspritzen von überhitztem Dampf (4) in den Behälter (21, 22) mit den darin enthaltenen Lebensmittelprodukten (1);
e) nach Schritt d mithilfe eines Schweißverfahrens barrierebildendes Verschließen des Behälters (21, 22) mit den darin enthaltenen Lebensmittelprodukten (1) mit einer abdichtenden Folie (31, 32), um eine verschlossene Verpackung (61, 62, 63) zu bilden; und
f) nach Schritt e Abkühlen der verschlossenen Verpackung (61, 62, 63);
**dadurch gekennzeichnet, dass** zwischen Schritt d) und Schritt e) ein Gasgemisch (5), das Stickstoff und Kohlendioxid umfasst, in den Behälter (21, 22) mit den darin enthaltenen Lebensmittelprodukten (1) eingespritzt wird.

2. Verfahren gemäß Anspruch 1, **dadurch gekennzeichnet, dass** das Gewicht der Lebensmittelprodukte (1) zwischen 20 g und 5000 g beträgt.

3. Verfahren gemäß einem der vorstehenden Ansprüche, **dadurch gekennzeichnet, dass** der schalenförmige Behälter (21, 22) durch Thermoformen gebildet ist.

4. Verfahren gemäß einem der vorstehenden Ansprüche, **dadurch gekennzeichnet, dass** das Gasgemisch (5) zwischen 10 und 50 Vol.-% Kohlendioxid umfasst.

5. Verfahren gemäß einem der vorstehenden Ansprüche, **dadurch gekennzeichnet, dass** das Gasgemisch (5) zwischen 50 und 90 Vol.-% Stickstoff umfasst.

6. Verfahren gemäß einem der vorstehenden Ansprüche, **dadurch gekennzeichnet, dass** der überhitzte Dampf (4) eine Temperatur zwischen 100 °C und 180 °C aufweist.

7. Verfahren gemäß einem der vorstehenden Ansprüche, **dadurch gekennzeichnet, dass** der überhitzte Dampf (4) mit einem Dampfdruck zwischen 150 kPa und 1000 kPa eingespritzt wird.

8. Verfahren gemäß einem der vorstehenden Ansprüche, **dadurch gekennzeichnet, dass** der überhitzte Dampf (4) über einen Zeitraum zwischen 2 s und 12 s eingespritzt wird.

## Revendications

1. Procédé d'emballage de produits alimentaires traités et au moins partiellement solides (1) qui, en raison de leur nature, nécessitent une étape de chauffage indispensable, comprenant les étapes suivantes :
a) chauffage de ces produits alimentaires (1) de manière à ce que les conditions de pasteurisation P90/10 soient obtenues ;
b) fourniture d'un récipient en forme de bac (21, 22) pour les produits alimentaires (1) ;
c) après les étapes a et b, introduction des produits alimentaires (1) dans le récipient (21, 22) quand, en conséquence du chauffage à l'étape a, ces produits alimentaires (1) ont déjà une température d'au moins 65° ;
d) après l'étape c, injection de vapeur surchauffée (4) dans le récipient (21, 22) avec les produits alimentaires (1) contenus à l'intérieur ;
e) après l'étape d, au moyen d'une technique de soudage avec un film de scellage (31, 32), fermeture avec formation de barrière du récipient (21, 22) avec les produits alimentaires (1) contenus à l'intérieur pour former un emballage scellé (61, 62, 63) ; et
f) après l'étape e, refroidissement de l'emballage scellé (61, 62, 63) ;
**caractérisé en ce qu'**entre l'étape d) et l'étape e), un mélange gazeux (5) comprenant de l'azote et du dioxyde de carbone est injecté dans le récipient (21, 22) avec les produits alimentaires (1) contenus à l'intérieur.

2. Procédé selon la revendication 1, **caractérisé en ce que** le poids des produits alimentaires (1) se situe entre 20 g et 5000 g.

3. Procédé selon une des revendications précédentes, **caractérisé en ce que** le récipient en forme de bac (21, 22) est formé par thermoformage.

4. Procédé selon une des revendications précédentes, **caractérisé en ce que** le mélange gazeux (5) comprend entre 10 et 50 % en volume de dioxyde de carbone.

5. Procédé selon une des revendications précédentes, **caractérisé en ce que** le mélange gazeux (5) comprend entre 50 et 90 % en volume d'azote.

6. Procédé selon une des revendications précédentes, **caractérisé en ce que** la vapeur surchauffée (4) a une température comprise entre 100 °C et 180 °C.

7. Procédé selon une des revendications précédentes, **caractérisé en ce que** la vapeur surchauffée (4) est injectée à une pression de vapeur comprise entre 150 kPa et 1000 kPa.

8. Procédé selon une des revendications précédentes, **caractérisé en ce que** la vapeur surchauffée (4) est injectée sur un laps de temps compris entre 2 s et 12 s.
